# EUROPEAN PATENT APPLICATION

(11) **EP 3 879 922 A1**
(43) Date of publication of application: **15.09.2021**
(21) Application number: 20193256.3
(22) Date of filing: 28.08.2020
(51) Int. Cl.: H04W 76/28, H04W 68/00, H04W 52/02, H04W 8/18

(54) **METHODS AND DEVICES FOR RESOLVING DUAL SUBSCRIBER IDENTITY MODULE, DUAL SIM (DS), PAGING CONFLICT, AND STORAGE MEDIUM**

(30) Priority: 09.03.2020 CN 202010158295
(71) Applicant: Beijing Xiaomi Mobile Software Co., Ltd., Beijing 100085 (CN)
(72) Inventor: CUI, Hengbin, Beijing, 100085 (CN); PU, Jingjing, Beijing, 100085 (CN)
(74) Representative: Gevers Patents

(57) **Abstract**

A Connected Discontinuous Reception, cDRX, long cycle for paging a data service SIM and a Discontinuous Reception, DRX, cycle for paging a call service SIM are acquired (101, 302, 402, 502). When the cDRX long cycle equals the DRX cycle, a DRX cycle changing request is sent to a base station associated with the call service SIM (102). The DRX cycle is reset based on a DRX cycle changing response sent by the base station (103).

## Description

### TECHNICAL FIELD

The subject disclosure relates to the field of User Equipment (UE) equipped with dual Subscriber Identity Modules, SIM (DS), and more particularly, to a method and device for resolving a DS paging conflict, and a storage medium.

### BACKGROUND

Nowadays, 4G networks have been widely applicable, and application of 5G networks is on its way. Under such circumstances, a number of users use Dual SIM Dual Standby (DSDS) cell phones. However, most of these are DSDS Single Pass cell phones. That is, when a service is provided using one SIM (card), the other SIM has to idle.

In an existing 4G network, most cell phones may support Discontinuous Reception (DRX) in an idle mode. The network may configure a DRX cycle for paging an idle cell phone. The cell phone may monitor a paging message periodically according to the DRX paging cycle configured by the network. Furthermore, the cell phone may save power through Connected DRX (cDRX) paging in a Long Term Evolution (LTE) connected state.

Thus, a cDRX cycle per se may be identical to a DRX cycle. For example, a network may configure a cDRX cycle for paging a first SIM of a data service to be 32 radio frames (rf32, namely 320ms, spec 36331). The network may configure a DRX cycle for paging a second SIM of a call service to be rf32 (320ms), as well. Then, there is basically a 100% chance that a paging conflict may occur frequently. This is because, due to a property of DSDS hardware thereof, a cell phone can monitor paging of only one SIM at a time. In this case, there will be abnormality such as frequent disconnection of the cell phone, a failure to open a data page, a game stuttering, a call service SIM missing a call, etc., leading to poor user experience.

### SUMMARY

In view of this, embodiments herein provide a method and device for resolving a DS paging conflict, and a storage medium.

According to an aspect herein, a method for resolving a dual Subscriber Identity Module, SIM (DS) paging conflict is applicable to User Equipment (UE). The method includes:
acquiring a Connected Discontinuous Reception (cDRX) long cycle for paging a data service SIM and a Discontinuous Reception (DRX) cycle for paging a call service SIM;
in response to determining that the cDRX long cycle equals the DRX cycle, sending a DRX cycle changing request to a base station associated with the call service SIM; and
resetting the DRX cycle based on a DRX cycle changing response sent by the base station.

With the method herein, when it is determined that a Connected Discontinuous Reception (cDRX) long cycle for paging a data service SIM equals a Discontinuous Reception (DRX) cycle for paging a call service SIM, a DRX cycle changing request is sent to a base station associated with the call service SIM. The DRX cycle is reset based on a DRX cycle changing response sent by the base station. In this mode, frequent conflict in paging DS of a cell phone, due to the fact that a cDRX long cycle of a data service SIM thereof and a DRX cycle of a call service SIM thereof are equal, is solved, improving user experience greatly.

Sending the DRX cycle changing request to the base station associated with the call service SIM may include:
determining a target DRX cycle, including the target DRX cycle in the DRX cycle changing request, and sending the DRX cycle changing request to the base station; or
including request information in the DRX cycle changing request. The request information may be adapted to requesting the base station to assign a new DRX cycle.

The method may further include: before resetting the DRX cycle based on the DRX cycle changing response sent by the base station, receiving the DRX cycle changing response sent by the base station.

The DRX cycle changing response may include the new DRX cycle. The new DRX cycle may equal the target DRX cycle. The new DRX cycle may differ rom the target DRX cycle.

Sending the DRX cycle changing request to the base station associated with the call service SIM may include:
instructing a Network Access Service (NAS) module of the cell phone to send the DRX cycle changing request; and
sending, using the NAS module, the DRX cycle changing request to the base station.

The DRX cycle changing request may be included in a tracking area update request or an attach request.

Resetting the DRX cycle based on the DRX cycle changing response sent by the base station may include:
increasing the DRX cycle based on the DRX cycle changing response sent by the base station.

According to an aspect herein, a method for resolving a dual Subscriber Identity Module, SIM (DS) paging conflict is applicable to a base station. The method includes:
receiving a Discontinuous Reception (DRX) cycle changing request sent by User Equipment (UE);
generating a DRX cycle changing response based on the DRX cycle changing request; and sending the DRX cycle changing response to the UE.

The advantages and technical effects of the method correspond to those of a method herein presented before.

Generating the DRX cycle changing response based on the DRX cycle changing request, and sending the DRX cycle changing response to the UE may include:
in response to determining that the DRX cycle changing request includes a target DRX cycle, and that the target DRX cycle is not supported, configuring a new DRX cycle, including the new DRX cycle in the DRX cycle changing response, and sending the DRX cycle changing response to the UE; or
in response to determining that the DRX cycle changing request includes no target DRX cycle, configuring a new DRX cycle, including the new DRX cycle in the DRX cycle changing response, and sending the DRX cycle changing response to the UE.

According to an aspect herein, a device for resolving a dual Subscriber Identity Module, SIM (DS) paging conflict is applicable to User Equipment (UE). The device may include an acquiring module, a request sending module, and a cycle resetting module.

The acquiring module may be adapted to acquiring a Connected Discontinuous Reception (cDRX) long cycle for paging a data service SIM and a Discontinuous Reception (DRX) cycle for paging a call service SIM.

The request sending module may be adapted to, in response to determining that the cDRX long cycle equals the DRX cycle, sending a DRX cycle changing request to a base station associated with the call service SIM.

The cycle resetting module may be adapted to resetting the DRX cycle based on a DRX cycle changing response sent by the base station.

The advantages and technical effects of the device herein correspond to those of a method herein presented before.

The request sending module may be adapted to:
determining a target DRX cycle, including the target DRX cycle in the DRX cycle changing request, and sending the DRX cycle changing request to the base station; or
including request information in the DRX cycle changing request, the request information being adapted to requesting the base station to assign a new DRX cycle.

The device may further include a receiving module.

The receiving module may be adapted to receiving the DRX cycle changing response sent by the base station. The DRX cycle changing response may include the new DRX cycle. The new DRX cycle may equal the target DRX cycle. The new DRX cycle may differ from the target DRX cycle.

The request sending module may include an instructing module and a Network Access Service (NAS) module.

The instructing module may be adapted to instructing the NAS module to send the DRX cycle changing request.

The NAS module may be adapted to sending the DRX cycle changing request to the base station.

The DRX cycle changing request may be included in a tracking area update request or an attach request.

The cycle resetting module may be adapted to:
increasing the DRX cycle based on the DRX cycle changing response sent by the base station.

According to an aspect herein, a device for resolving a dual Subscriber Identity Module, SIM (DS) paging conflict is applicable to a base station. The device may include a request receiving module and a responding module.

The request receiving module may be adapted to receiving a Discontinuous Reception (DRX) cycle changing request sent by User Equipment (UE).

The responding module may be adapted to generating a DRX cycle changing response based on the DRX cycle changing request; and sending the DRX cycle changing response to the UE.

The advantages and technical effects of the device herein correspond to those of a method herein presented before.

The responding module may be adapted to:
in response to determining that the DRX cycle changing request includes a target DRX cycle, and that the target DRX cycle is not supported, configuring a new DRX cycle, including the new DRX cycle in the DRX cycle changing response, and sending the DRX cycle changing response to the UE; or
in response to determining that the DRX cycle changing request includes no target DRX cycle, configuring a new DRX cycle, including the new DRX cycle in the DRX cycle changing response, and sending the DRX cycle changing response to the UE.

According to an aspect herein, a device for resolving a dual Subscriber Identity Module, SIM (DS) paging conflict is applicable to User Equipment (UE). The device may include a processor and memory.

The memory may be adapted to storing an instruction executable by the processor.

The processor may be adapted to:
acquiring a Connected Discontinuous Reception (cDRX) long cycle for paging a data service SIM and a Discontinuous Reception (DRX) cycle for paging a call service SIM;
in response to determining that the cDRX long cycle equals the DRX cycle, sending a DRX cycle changing request to a base station associated with the call service SIM; and
resetting the DRX cycle based on a DRX cycle changing response sent by the base station.

The advantages and technical effects of the device herein correspond to those of a method herein presented before.

According to an aspect herein, a device for resolving a dual Subscriber Identity Module, SIM (DS) paging conflict is applicable to a base station. The device may include a processor and memory.

The memory may be adapted to storing an instruction executable by the processor.

The processor may be adapted to:
receiving a Discontinuous Reception (DRX) cycle changing request sent by User Equipment (UE);
generating a DRX cycle changing response based on the DRX cycle changing request; and sending the DRX cycle changing response to the UE.

The advantages and technical effects of the device herein correspond to those of a method herein presented before.

A method herein may be determined by computer program instructions.

According to an aspect herein, a transitory or non-transitory computer-readable storage medium or recording medium has stored therein instructions which, when executed by a processor of a device, allow the device to implement a method herein.

Said instructions can use any programming language and take the form of source code, object code or a code intermediate between source code and object code, such as a partially compiled form, or any other desirable form.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The above general description and detailed description below are but exemplary and explanatory, and do not limit the subject disclosure.

### BRIEF DESCRIPTION OF THE ACCOMPANYING DRAWINGS

Drawings here are incorporated in and constitute part of the subject disclosure, illustrate embodiments according to the subject disclosure, and together with the subject disclosure, serve to explain the principle of the subject disclosure.
FIG. 1 is a flowchart of a method for resolving a DS paging conflict according to an exemplary embodiment.
FIG. 2 is a flowchart of a method for resolving a DS paging conflict according to an exemplary embodiment.
FIG. 3 is a flowchart of a method for resolving a DS paging conflict according to an exemplary embodiment.
FIG. 4 is a flowchart of a method for resolving a DS paging conflict according to an exemplary embodiment.
FIG. 5 is a flowchart of a method for resolving a DS paging conflict according to an exemplary embodiment.
FIG. 6 is a block diagram of a device for resolving a DS paging conflict according to an exemplary embodiment.
FIG. 7 is a block diagram of a device for resolving a DS paging conflict according to an exemplary embodiment.
FIG. 8 is a block diagram of a device according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are mere examples of the apparatus (i.e., device) and method in accordance with certain aspects of the subject disclosure as recited in the accompanying claims. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

In addition, a term such as "first", "second", etc., may serve but for description purposes and should not be construed as indication or implication of relevancy, or implication of a quantity of technical features under consideration. Accordingly, a feature with an attributive "first", "second", etc., may expressly or implicitly include at least one such feature. Herein by "multiple", it may mean two or more unless indicated otherwise expressly.

A DSDS Single Pass cell phone may be equipped with two SIMs for network access. In general, one SIM may be adapted to a data service, e.g., data usage, etc. The other SIM may be adapted to a call service, e.g., receiving an incoming call, making an outgoing call, etc. A data service SIM may generally be referred to as a primary SIM. A call service SIM may generally be referred to as a secondary SIM. When a user is browsing a web page, playing a game, etc., a data service SIM may be in a service linked state. In this case, a network may configure a cDRX cycle. When a user is receiving a call, making a call, etc., a call service SIM may be in a service linked state. In this case, a network may configure a DRX cycle. Therefore, under normal circumstances, a primary SIM and a secondary SIM of a cell phone may be in a state corresponding to a combination of a cDRX and a DRX.

When a cDRX cycle of a primary SIM and a DRX cycle of a secondary SIM are equal, there may be constant DS paging conflicts between pagings of the two SIMs. In this case, there will be constant abnormalities in usage of a cell phone, such as a failure to open a data page, a game stuttering or being interrupted, a secondary SIM missing a call, etc. This is because, in event of a conflict, a cell phone may randomly select to receive paging of one SIM, throwing away the paging message of the other. If paging of a secondary SIM is thrown away, one may miss a call. If paging of a primary SIM is thrown away, a radio link failure may occur to the primary SIM, triggering Radio Resource Control (RRC) link reestablishment, thereby leading to upper service data stuttering.

Embodiments herein provide a method for resolving a DS paging conflict. With the method, when it is determined that a Connected Discontinuous Reception (cDRX) long cycle for paging a data service SIM equals a Discontinuous Reception (DRX) cycle for paging a call service SIM, a DRX cycle changing request is sent to a base station associated with the call service SIM. The DRX cycle is reset based on a DRX cycle changing response sent by the base station. In this mode, frequent conflict in paging DS of a cell phone, due to the fact that a cDRX long cycle of a data service SIM thereof and a DRX cycle of a call service SIM thereof are equal, is solved, improving user experience greatly.

The method herein may be applicable to User Equipment (UE) equipped with DS, such as a cell phone equipped with DS, so as to solve the problem of frequent paging conflicts between two SIMs.

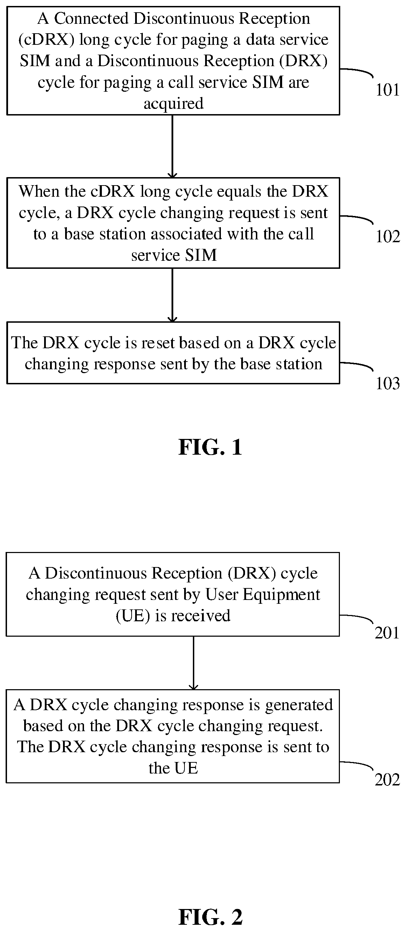

FIG. 1 is a flowchart of a method for resolving a DS paging conflict according to an exemplary embodiment. As shown in FIG. 1, the method may include a step as follows.

In S101, a Connected Discontinuous Reception (cDRX) long cycle for paging a data service SIM and a Discontinuous Reception (DRX) cycle for paging a call service SIM are acquired.

In S102, when the cDRX long cycle equals the DRX cycle, a DRX cycle changing request is sent to a base station associated with the call service SIM.

In S103, the DRX cycle is reset based on a DRX cycle changing response sent by the base station.

In S101, a data service SIM and a call service SIM may be registered successfully. The data service SIM or the call service SIM may enter a connected state. Then, a cDRX long cycle for paging the data service SIM and a DRX cycle for paging the call service SIM may be acquired and compared.

In S102, it may be determined whether the cDRX long cycle equals the DRX cycle by determining whether a parameter longDRX of cDRX of the data service SIM and a parameter defaultPagingcycle of DRX of the call service SIM are configured to be equal. For example, the parameter longDRX may be configured to be longDRX-CycleStartOffset sf320 : 8 // 320ms. The parameter defaultPagingcycle may be configured to be defaultPagingCycle rf32, //320ms. This means that both the cDRX long cycle for paging the data service SIM and the DRX cycle for paging the call service SIM are 320ms.

In this case, a DRX cycle changing request may be sent to a base station associated with the call service SIM to solve the paging conflict.

In S103, the DRX cycle may be reset based on a DRX cycle changing response sent by the base station according to an agreed flow. The new DRX cycle may differ from the cDRX long cycle.

With the method, a DRX cycle for paging a call service SIM may be changed such that the new DRX cycle no longer equals a cDRX long cycle. Accordingly, frequent conflict in paging DS of a cell phone, due to the fact that a cDRX long cycle of a data service SIM thereof and a DRX cycle of a call service SIM thereof are equal, is solved, improving user experience.

In S102, the DRX cycle changing request may be sent to the base station associated with the call service SIM as follows.

A message may be sent to a Network Access Service (NAS) module, instructing the NAS module to send the DRX cycle changing request to the base station.

Having received the message, the NAS module may send the DRX cycle changing request to the base station. The request may be a tracking area update request, an attach request, etc. Accordingly, the DRX cycle may be changed by implementing a re-registration flow.

According to one or more embodiments herein, the DRX cycle changing request may be sent to the base station associated with the call service SIM as follows.

A target DRX cycle may be determined. The target DRX cycle may be included in the DRX cycle changing request. Then, the DRX cycle changing request may be sent to the base station.

Alternatively, request information may be included in the DRX cycle changing request. The request information may be adapted to requesting the base station to assign a new DRX cycle.

As mentioned above, to change the DRX cycle, a target DRX cycle may be determined by the cell phone and sent to the base station. Alternatively, a new DRX cycle may be determined by the base station.

The cDRX long cycle may equal the DRX cycle. Then, the DRX cycle may have to be changed. A target DRX cycle may be determined by the cell phone, included in a DRX cycle changing request, and sent to the base station. Alternatively, no target DRX cycle is included in a DRX cycle changing request sent by the cell phone. Instead, request information adapted to requesting the base station to assign a new DRX cycle may be included in a DRX cycle changing request. Having received the request, the base station may determine a new DRX cycle.

In the first case, when a tracking area update request or an attach request is sent to the base station, a parameter cycle_len_coeff in a parameter drx_params_incl may be set as a target parameter of the cell phone, such as to be rf64:640ms. The target parameter may have to differ from the cDRX cycle for paging the data service SIM. A relevant parameter may be set as follows.

```
        drx_params_incl = 1 (0x1)
             drx_params
               split_pg_cycle_code = 10 (0xa)
               cycle_len_coeff = 0 (0x0)// rf64 /rf32 /rf128 ...
               split_on_ccch = 0 (0x0)
               non_drx_timer = 0 (0x0)
```

A target DRX cycle may be set through a parameter cycle_len_coeff.

In the second case, a parameter bit, such as cycle_change_req, may be set in a DRX cycle changing request to be sent to the base station, indicating a change request by the cell phone. In this mode, instead of specifying a target DRX cycle, the cell phone may set a parameter cycle_change_req in a DRX cycle changing request.

According to one or more embodiments herein, before the DRX cycle is reset based on the DRX cycle changing response sent by the base station, the method may include a step as follows.

The DRX cycle changing response sent by the base station may be received. The DRX cycle changing response may include the new DRX cycle. The new DRX cycle may equal the target DRX cycle. Alternatively, the new DRX cycle may differ from the target DRX cycle.

When the cell phone sends a target DRX cycle to the base station, the base station may have two reactions. Having received a tracking area update request or an attach request sent by the cell phone including a target DRX cycle, in response to the DRX cycle changing request by the cell phone, the base station may determine whether the target DRX cycle is compatible to the base station. If the target DRX cycle is compatible, the base station may configure a DRX parameter corresponding to the request sent by the cell phone. Otherwise if the target DRX cycle is incompatible, the base station may configure, according to a network environment configuration per se, a different new DRX cycle for the cell phone, and send the new DRX cycle to the cell phone.

The cell phone may send no target DRX cycle. A target DRX cycle may be determined by the base station. Having received a DRX cycle changing request sent by the cell phone, the base station may configure, according to a network environment configuration per se, a different new DRX cycle for the cell phone, and send the new DRX cycle to the cell phone.

Accordingly, in some cases, a target DRX cycle is configured by the base station and sent to the cell phone. That is, a target DRX cycle may be configured by the cell phone or the base station.

According to one or more embodiments herein, the DRX cycle changing request may be included in a tracking area update request or an attach request.

A DRX cycle changing request may be included in a tracking area update request or an attach request. After the cell phone has sent a tracking area update request or an attach request, a new DRX cycle may be configured by implementing a re-registration flow.

According to one or more embodiments herein, the DRX cycle changing request may be sent to the base station associated with the call service SIM as follows.

A Network Access Service (NAS) module may be instructed to send the DRX cycle changing request.

The DRX cycle changing request may be sent to the base station using the NAS module.

A NAS module may be instructed by an RRC module to send the DRX cycle changing request.

According to one or more embodiments herein, the DRX cycle may be reset based on the DRX cycle changing response sent by the base station as follows.

The DRX cycle may be increased based on the DRX cycle changing response sent by the base station.

According to one or more embodiments herein, the DRX cycle may be replaced by a greater DRX cycle.

According to one or more embodiments herein, a method for resolving a DS paging conflict is applicable to a base station. As shown in FIG. 2, the method includes a step as follows.

In S201, a Discontinuous Reception (DRX) cycle changing request sent by User Equipment (UE) is received.

In S202, a DRX cycle changing response is generated based on the DRX cycle changing request. The DRX cycle changing response is sent to the UE.

Having received a DRX cycle changing request, a base station may respond based on different cases as follows.

According to one or more embodiments herein, the DRX cycle changing response may be generated based on the DRX cycle changing request, and sent to the UE as follows.

When the DRX cycle changing request includes a target DRX cycle, and the target DRX cycle is not supported, a new DRX cycle may be configured. The new DRX cycle may be included in the DRX cycle changing response. The DRX cycle changing response may be sent to the UE.

When the DRX cycle changing request includes no target DRX cycle, a new DRX cycle may be configured. The new DRX cycle may be included in the DRX cycle changing response. The DRX cycle changing response may be sent to the UE.

When the DRX cycle changing request includes a target DRX cycle, and the target DRX cycle is supported, the base station may configure a parameter per se based on the target DRX cycle, and send a response message to the UE.

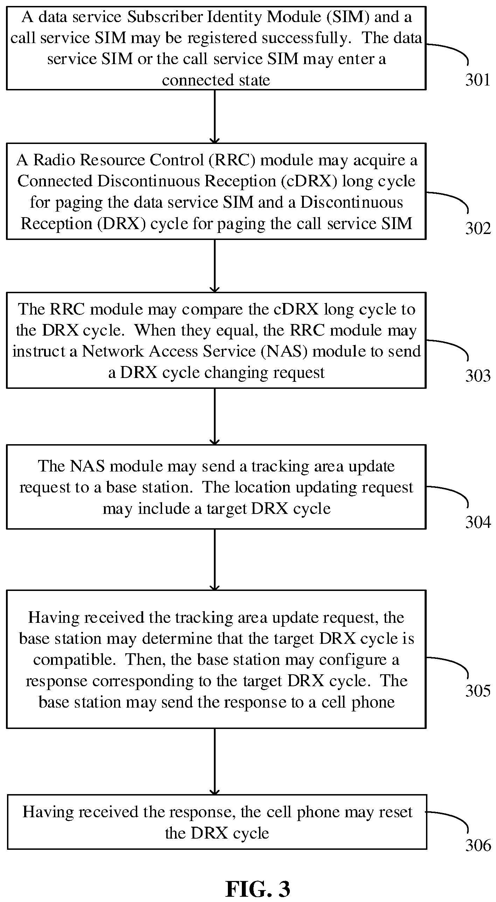

An embodiment herein may be described below with reference to a scene of application. As shown in FIG. 3, according to one or more embodiments herein, a method for resolving a dual Subscriber Identity Module, SIM (DS) paging conflict may include a step as follows.

In S301, a data service Subscriber Identity Module (SIM) and a call service SIM may be registered successfully. The data service SIM or the call service SIM may enter a connected state.

In S302, a Radio Resource Control (RRC) module may acquire a Connected Discontinuous Reception (cDRX) long cycle for paging the data service SIM and a Discontinuous Reception (DRX) cycle for paging the call service SIM.

In S303, the RRC module may compare the cDRX long cycle to the DRX cycle. When they equal, the RRC module may instruct a Network Access Service (NAS) module to send a DRX cycle changing request.

In S304, the NAS module may send a tracking area update request to a base station. The location updating request may include a target DRX cycle.

In S305, having received the tracking area update request, the base station may determine that the target DRX cycle is compatible. Then, the base station may configure a response corresponding to the target DRX cycle. The base station may send the response to a cell phone.

In S306, having received the response, the cell phone may reset the DRX cycle.

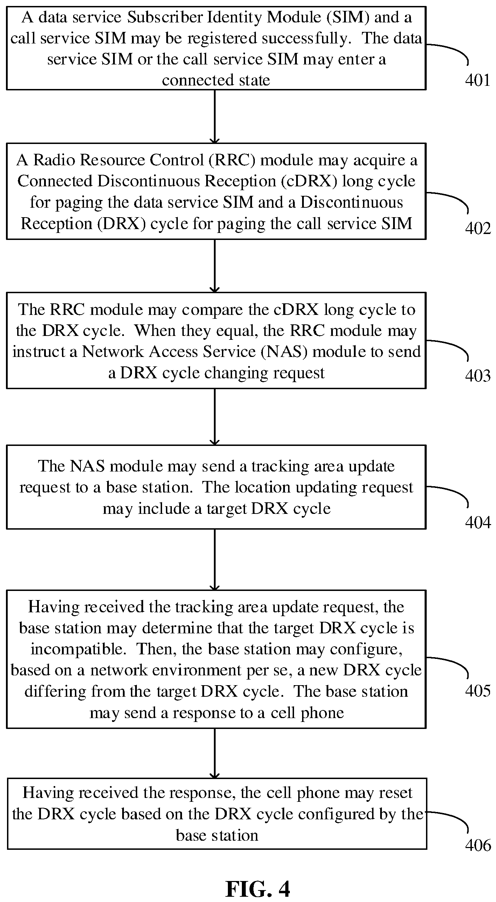

FIG. 4 illustrates an embodiment herein. As shown in FIG. 4, according to one or more embodiments herein, a method for resolving a DS paging conflict may include a step as follows.

In S401, a data service Subscriber Identity Module (SIM) and a call service SIM may be registered successfully. The data service SIM or the call service SIM may enter a connected state.

In S402, a Radio Resource Control (RRC) module may acquire a Connected Discontinuous Reception (cDRX) long cycle for paging the data service SIM and a Discontinuous Reception (DRX) cycle for paging the call service SIM.

In S403, the RRC module may compare the cDRX long cycle to the DRX cycle. When they equal, the RRC module may instruct a Network Access Service (NAS) module to send a DRX cycle changing request.

In S404, the NAS module may send a tracking area update request to a base station. The location updating request may include a target DRX cycle.

In S405, having received the tracking area update request, the base station may determine that the target DRX cycle is incompatible. Then, the base station may configure, based on a network environment per se, a new DRX cycle differing from the target DRX cycle. The base station may send a response to a cell phone.

In S406, having received the response, the cell phone may reset the DRX cycle based on the DRX cycle configured by the base station.

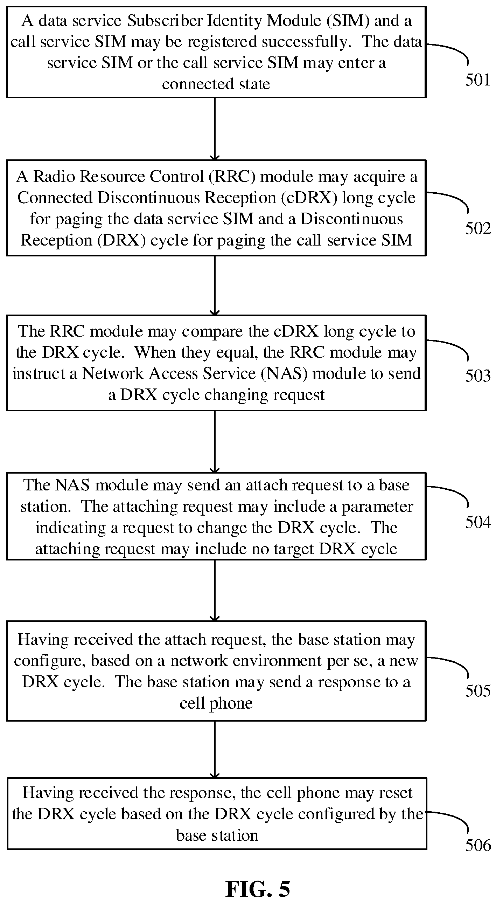

FIG. 5 illustrates an embodiment herein. As shown in FIG. 5, according to one or more embodiments herein, a method for resolving a DS paging conflict may include a step as follows.

In S501, a data service Subscriber Identity Module (SIM) and a call service SIM may be registered successfully. The data service SIM or the call service SIM may enter a connected state.

In S502, a Radio Resource Control (RRC) module may acquire a Connected Discontinuous Reception (cDRX) long cycle for paging the data service SIM and a Discontinuous Reception (DRX) cycle for paging the call service SIM.

In S503, the RRC module may compare the cDRX long cycle to the DRX cycle. When they equal, the RRC module may instruct a Network Access Service (NAS) module to send a DRX cycle changing request.

In S504, the NAS module may send an attach request to a base station. The attaching request may include a parameter indicating a request to change the DRX cycle. The attaching request may include no target DRX cycle.

In S505, having received the attach request, the base station may configure a new DRX cycle based on a network environment per se. The base station may send a response to a cell phone.

In S506, having received the response, the cell phone may reset the DRX cycle based on the DRX cycle configured by the base station.

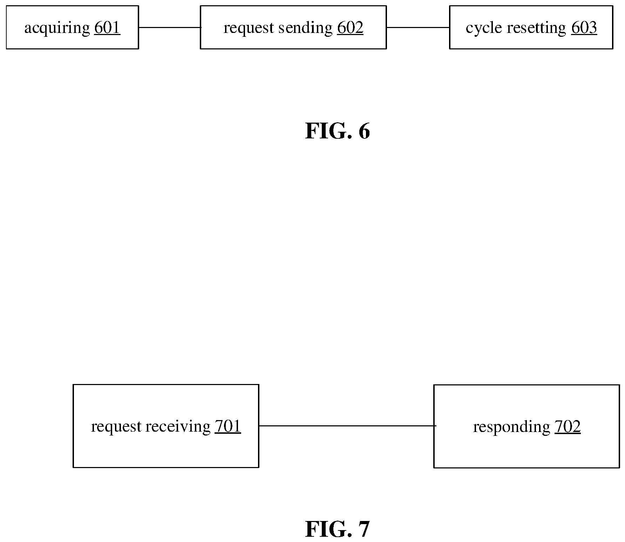

According to one or more embodiments herein, a device for resolving a dual Subscriber Identity Module, SIM (DS) paging conflict is applicable to UE. As shown in FIG. 6, the device may include an acquiring module, a request sending module, and a cycle resetting module.

The acquiring module 601 is adapted to acquiring a Connected Discontinuous Reception (cDRX) long cycle for paging a data service SIM and a Discontinuous Reception (DRX) cycle for paging a call service SIM.

The request sending module 602 is adapted to, in response to determining that the cDRX long cycle equals the DRX cycle, sending a DRX cycle changing request to a base station associated with the call service SIM.

The cycle resetting module 603 is adapted to resetting the DRX cycle based on a DRX cycle changing response sent by the base station.

According to one or more embodiments herein, the request sending module 602 may be further adapted as follows.

The request sending module may be further adapted to determining a target DRX cycle, including the target DRX cycle in the DRX cycle changing request, and sending the DRX cycle changing request to the base station.

Alternatively, the request sending module may be further adapted to including request information in the DRX cycle changing request. The request information may be adapted to requesting the base station to assign a new DRX cycle.

According to one or more embodiments herein, the device may further include a receiving module.

The receiving module may be adapted to receiving the DRX cycle changing response sent by the base station. The DRX cycle changing response may include the new DRX cycle. The new DRX cycle may equal the target DRX cycle. The new DRX cycle may differ from the target DRX cycle.

According to one or more embodiments herein, the DRX cycle changing request may be included in a tracking area update request or an attach request.

According to one or more embodiments herein, the request sending module 602 may include an instructing module and a Network Access Service (NAS) module.

The instructing module may be adapted to instructing the NAS module to send the DRX cycle changing request.

The NAS module may be adapted to sending the DRX cycle changing request to the base station.

According to one or more embodiments herein, the cycle resetting module may be further adapted as follows.

The cycle resetting module may be further adapted to increasing the DRX cycle based on the DRX cycle changing response sent by the base station.

According to one or more embodiments herein, a device for resolving a dual Subscriber Identity Module, SIM (DS) paging conflict is applicable to a base station. As shown in FIG. 7, the device may include a request receiving module and a responding module.

The request receiving module 701 is adapted to receiving a Discontinuous Reception (DRX) cycle changing request sent by User Equipment (UE).

The responding module 702 is adapted to generating a DRX cycle changing response based on the DRX cycle changing request; and sending the DRX cycle changing response to the UE.

According to one or more embodiments herein, the responding module 702 may be adapted as follows.

The responding module may be further adapted to, in response to determining that the DRX cycle changing request includes a target DRX cycle, and that the target DRX cycle is not supported, configuring a new DRX cycle, including the new DRX cycle in the DRX cycle changing response, and sending the DRX cycle changing response to the UE.

Alternatively, the responding module may be further adapted to, in response to determining that the DRX cycle changing request includes no target DRX cycle, configuring a new DRX cycle, including the new DRX cycle in the DRX cycle changing response, and sending the DRX cycle changing response to the UE.

A module of the device according to at least one embodiment herein may perform an operation in a mode elaborated in at least one embodiment of the method herein, which will not be repeated here.

With the method, when it is determined that a Connected Discontinuous Reception (cDRX) long cycle for paging a data service SIM equals a Discontinuous Reception (DRX) cycle for paging a call service SIM, a DRX cycle changing request is sent to a base station associated with the call service SIM. The DRX cycle is reset based on a DRX cycle changing response sent by the base station. In this mode, frequent conflict in paging DS of a cell phone, due to the fact that a cDRX long cycle of a data service SIM thereof and a DRX cycle of a call service SIM thereof are equal, is solved, improving user experience greatly.

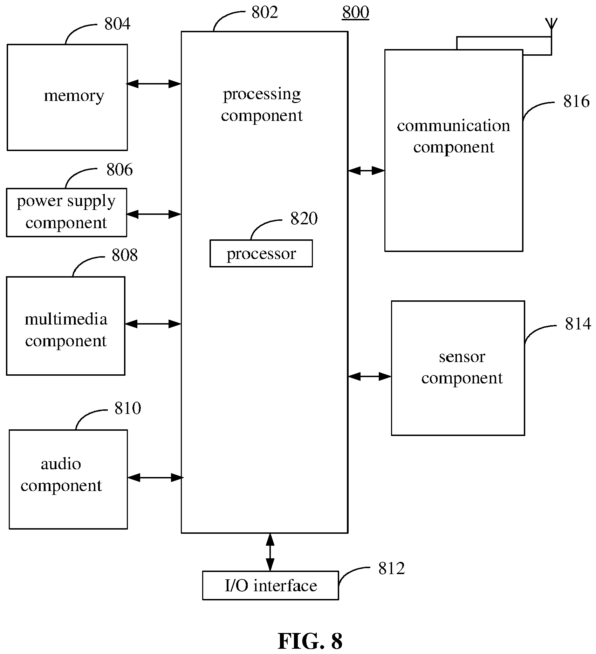

FIG. 8 is a block diagram of a device 800 for resolving a DS paging conflict according to an exemplary embodiment.

Referring to FIG. 8, the device 800 may include at least one of a processing component 802, memory 804, a power supply component 806, a multimedia component 808, an audio component 810, an Input / Output (I / O) interface 812, a sensor component 814, a communication component 816, etc.

The processing component 802 may generally control an overall operation of the device 800, such as operations associated with display, a telephone call, data communication, a camera operation, a recording operation, etc. The processing component 802 may include one or more processors 820 to execute instructions so as to complete all or a part of an aforementioned method. In addition, the processing component 802 may include one or more modules to facilitate interaction between the processing component 802 and other components. For example, the processing component 802 may include a multimedia portion to facilitate interaction between the multimedia component 808 and the processing component 802.

The memory 804 may be adapted to storing various types of data to support the operation at the device 800. Examples of such data may include instructions of any application or method adapted to operating on the device 800, contact data, phonebook data, messages, pictures, videos, etc. The memory 804 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 806 may supply electric power to various components of the device 800. The power supply component 806 may include a power management system, one or more power sources, and other components related to generating, managing, and distributing electricity for the device 800.

The multimedia component 808 may include a screen that provides an output interface between the device 800 and a user. The screen may include a Liquid Crystal Display (LCD), a Touch Panel (TP), etc. If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 808 may include at least one of a front camera or a rear camera. When the device 800 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 810 may be adapted to outputting and / or inputting an audio signal. For example, the audio component 810 may include a microphone (MIC). When the device 800 is in an operation mode such as a call mode, a recording mode, a voice recognition mode, etc., the MIC may be adapted to receiving an external audio signal. The received audio signal may be further stored in the memory 804 or may be sent via the communication component 816. The audio component 810 may further include a loudspeaker adapted to outputting the audio signal.

The I/O interface 812 may provide an interface between the processing component 802 and a peripheral interface portion. Such a peripheral interface portion may be a keypad, a click wheel, a button, etc. Such a button may include but is not limited to at least one of a homepage button, a volume button, a start button, or a lock button.

The sensor component 814 may include one or more sensors for assessing various states of the device 800. For example, the sensor component 814 may detect an on/off state of the device 800 and relative positioning of components such as the display and the keypad of the device 800. The sensor component 814 may further detect a change in the position of the device 800 or of a component of the device 800, whether there is contact between the device 800 and a user, the orientation or acceleration / deceleration of the device 800, a change in the temperature of the device 800, etc. The sensor component 814 may include a proximity sensor adapted to detecting existence of a nearby object without physical contact. The sensor component 814 may further include an optical sensor such as a Complementary Metal-Oxide-Semiconductor (CMOS) or a Charge-Coupled-Device (CCD) image sensor used in an imaging application. The sensor component 814 may further include an acceleration sensor, a gyroscope sensor, a magnetic sensor, a pressure sensor, a temperature sensor, etc.

The communication component 816 may be adapted to facilitating wired or wireless communication between the device 800 and other equipment. The device 800 may access a wireless network based on a communication standard such as Wi-Fi, 2G, 3G..., or a combination thereof. The communication component 816 may broadcast related information or receive a broadcast signal from an external broadcast management system via a broadcast channel. The communication component 816 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

In an exemplary embodiment, the device 800 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement the method.

In an exemplary embodiment, a transitory or non-transitory computer-readable storage medium including instructions, such as memory 804 including instructions, may be provided. The instructions may be executed by the processor 820 of the device 800 to implement an aforementioned method. For example, the transitory or non-transitory computer-readable storage medium may be Read-Only Memory (ROM), Random Access Memory (RAM), Compact Disc Read-Only Memory (CD-ROM), a magnetic tape, a floppy disk, optical data storage equipment, etc.

A transitory or non-transitory computer-readable storage medium has stored therein instructions which, when executed by a processor of a device, allow the device to implement a method for resolving a DS paging conflict. The method includes: acquiring a Connected Discontinuous Reception (cDRX) long cycle for paging a data service SIM and a Discontinuous Reception (DRX) cycle for paging a call service SIM; in response to determining that the cDRX long cycle equals the DRX cycle, sending a DRX cycle changing request to a base station associated with the call service SIM; and resetting the DRX cycle based on a DRX cycle changing response sent by the base station.

Other implementations of the subject disclosure will be apparent to a person having ordinary skill in the art that has considered the specification and or practiced the subject disclosure. The subject disclosure is intended to cover any variation, use, or adaptation of the subject disclosure following the general principles of the subject disclosure and including such departures from the subject disclosure as come within common knowledge or customary practice in the art. The specification and the embodiments are intended to be exemplary only, with a true scope of the subject disclosure being indicated by the appended claims.

Note that the subject disclosure is not limited to the exact construction that has been described above and illustrated in the accompanying drawings, and that various modifications and changes can be made to the subject disclosure without departing from the scope of the subject disclosure. It is intended that the scope of the subject disclosure is limited only by the appended claims.

## Claims

1. A method for resolving a dual Subscriber Identity Module, DS, paging conflict, applicable to User Equipment, UE, the method comprising:
acquiring a Connected Discontinuous Reception, cDRX, long cycle for paging a data service SIM and a Discontinuous Reception, DRX, cycle for paging a call service SIM (101, 302, 402, 502);
in response to determining that the cDRX long cycle equals the DRX cycle, sending a DRX cycle changing request to a base station associated with the call service SIM (102); and
resetting the DRX cycle based on a DRX cycle changing response sent by the base station (103).

2. The method of claim 1, wherein sending the DRX cycle changing request to the base station associated with the call service SIM comprises:
determining a target DRX cycle, including the target DRX cycle in the DRX cycle changing request, and sending the DRX cycle changing request to the base station; or
including request information in the DRX cycle changing request, the request information being adapted to requesting the base station to assign a new DRX cycle.

3. The method of claim 2, further comprising: before resetting the DRX cycle based on the DRX cycle changing response sent by the base station,
receiving the DRX cycle changing response sent by the base station, the DRX cycle changing response comprising the new DRX cycle, the new DRX cycle equaling the target DRX cycle or differing from the target DRX cycle.

4. The method of claim 1, wherein sending the DRX cycle changing request to the base station associated with the call service SIM comprises:
instructing a Network Access Service, NAS, module to send the DRX cycle changing request; and
sending, using the NAS module, the DRX cycle changing request to the base station.

5. The method of claim 4, wherein the DRX cycle changing request is included in a tracking area update request or an attach request.

6. The method of claim 1, wherein resetting the DRX cycle based on the DRX cycle changing response sent by the base station comprises:
increasing the DRX cycle based on the DRX cycle changing response sent by the base station.

7. A method for resolving a dual Subscriber Identity Module, DS, paging conflict, applicable to a base station, the method comprising:
receiving a Discontinuous Reception, DRX, cycle changing request sent by User Equipment, UE (201);
generating a DRX cycle changing response based on the DRX cycle changing request; and sending the DRX cycle changing response to the UE (202).

8. The method of claim 7, wherein generating the DRX cycle changing response based on the DRX cycle changing request, and sending the DRX cycle changing response to the UE comprises:
in response to determining that the DRX cycle changing request includes a target DRX cycle, and that the target DRX cycle is not supported, configuring a new DRX cycle, including the new DRX cycle in the DRX cycle changing response, and sending the DRX cycle changing response to the UE; or
in response to determining that the DRX cycle changing request includes no target DRX cycle, configuring a new DRX cycle, including the new DRX cycle in the DRX cycle changing response, and sending the DRX cycle changing response to the UE.

9. A device for resolving a dual Subscriber Identity Module, DS, paging conflict, applicable to User Equipment, UE, the device comprising an acquiring module (601), a request sending module (602), and a cycle resetting module (603),
wherein the acquiring module (601) is adapted to acquiring a Connected Discontinuous Reception, cDRX, long cycle for paging a data service SIM and a Discontinuous Reception, DRX, cycle for paging a call service SIM,
wherein the request sending module (602) is adapted to, in response to determining that the cDRX long cycle equals the DRX cycle, sending a DRX cycle changing request to a base station associated with the call service SIM,
wherein the cycle resetting module (603) is adapted to resetting the DRX cycle based on a DRX cycle changing response sent by the base station.

10. The device of claim 9, wherein the request sending module (602) is further adapted to:
determining a target DRX cycle, including the target DRX cycle in the DRX cycle changing request, and sending the DRX cycle changing request to the base station; or
including request information in the DRX cycle changing request, the request information being adapted to requesting the base station to assign a new DRX cycle.

11. The device of claim 10, further comprising a receiving module,
wherein the receiving module is adapted to receiving the DRX cycle changing response sent by the base station, the DRX cycle changing response comprising the new DRX cycle, the new DRX cycle equaling the target DRX cycle or differing from the target DRX cycle.

12. The device of claim 9, wherein the request sending module comprises an instructing module and a Network Access Service, NAS, module,
wherein the instructing module is adapted to instructing the NAS module of the cell phone to send the DRX cycle changing request,
wherein the NAS module is adapted to sending the DRX cycle changing request to the base station, and
wherein optionally the DRX cycle changing request is included in a tracking area update request or an attach request.

13. The device of claim 9, wherein the cycle resetting module is further adapted to:
increasing the DRX cycle based on the DRX cycle changing response sent by the base station.

14. A device for resolving a dual Subscriber Identity Module, DS, paging conflict, applicable to a base station, the device comprising a request receiving module (701) and a responding module (702),
wherein the request receiving module (701) is adapted to receiving a Discontinuous Reception, DRX, cycle changing request sent by User Equipment, UE,
wherein the responding module (702) is adapted to generating a DRX cycle changing response based on the DRX cycle changing request; and sending the DRX cycle changing response to the UE, and
wherein optionally the responding module (702) is further adapted to:
in response to determining that the DRX cycle changing request includes a target DRX cycle, and that the target DRX cycle is not supported, configuring a new DRX cycle, including the new DRX cycle in the DRX cycle changing response, and sending the DRX cycle changing response to the UE; or
in response to determining that the DRX cycle changing request includes no target DRX cycle, configuring a new DRX cycle, including the new DRX cycle in the DRX cycle changing response, and sending the DRX cycle changing response to the UE.

15. A computer-readable storage medium, having stored therein instructions which, when executed by a processor of a device, allow the device to implement the method of any one of claims 1 to 6, or the method of any one of claims 7 to 8.
